# EUROPÄISCHE PATENTSCHRIFT

(11) **EP 1 343 623 B1**
(45) Veröffentlichungstag und Bekanntmachung des Hinweises auf die Patenterteilung: **14.07.2004**
(21) Anmeldenummer: 01271281.6
(22) Anmeldetag: 24.10.2001
(51) Int. Cl.: B29C 47/10, B29C 47/40, B29C 47/50

(54) **ZUFÜHRAGGREGAT EINER EXTRUSIONSANLAGE FÜR DAS RECYCLING VON KUNSTSTOFFEN**
FEED UNIT OF AN EXTRUSION INSTALLATION FOR RECYCLING PLASTICS
SYSTEME D'ALIMENTATION D'UNE INSTALLATION D'EXTRUSION DESTINEE AU RECYCLAGE DE MATIERES PLASTIQUES

(30) Priorität: 20.12.2000 DE 10063420
(43) Veröffentlichungstag der Anmeldung: 17.09.2003
(73) Patentinhaber: Kreyenborg Verwaltungen und Beteiligungen GmbH & Co. KG, 48157 Münster (DE)
(72) Erfinder: GEHRKE, Karl-Heinz, 32130 Enger (DE); WIECHMANN, Ralf, 48145 Münster (DE); FELLMANN, Richard, 53797 Lohmar (DE)
(74) Vertreter: Habbel, Hans-Georg, Dipl.-Ing.
(86) Internationale Anmeldenummer: PCT/DE2001/004060
(87) Internationale Veröffentlichungsnummer: WO 2002/049827

(56) Entgegenhaltungen:
- DE-A- 2 027 363
- DE-A- 2 312 401
- DE-A- 2 834 043
- DE-A- 19 635 706
- US-A- 3 829 067

## Beschreibung

Die Erfindung bezieht sich auf eine Extrusionsanlage für das Recycling von nicht-rieselfähigen bzw. nicht-fließfähigen Kunststoffen gemäß dem Oberbegriff des Hauptanspruches.

Extrusionsanlagen mit einem Extruder nehmen feste Kunststoffe auf und pressen diese aus einer Öffnung vorwiegend kontinuierlich aus. Dabei verdichtet der Extruder die Formmasse, mischt, plastifiziert und homogenisiert diese. Die wesentlichen Baugruppen eines Extruders sind die in einem Zylinder arbeitende Extruderschnecke und das der Extruderschnecke die Formmasse zuführende Zuführaggregat.

Aus der DE 28 34 043 A ist ein Doppelschneckenextruder bekanntgeworden, der mit einer Doppelzuführung ausgerüstet ist, wobei auch die Zuführung als Extruder gestaltet ist, d. h. auch in der Zuführeinrichtung werden rieselfähige bzw. fließfähige Stoffe eingefüllt, die hier verdichtet werden und zum Zwecke der Beimischung dem eigentlichen Doppelextruder zugeführt werden. Mit solchen Anlagen sind nicht-rieselfähige bzw. nicht-fließfähige Kunststoffe nicht verarbeitbar, da aufgrund des großen Volumens dieser Stoffe eine einwandfreie Zuführung mit der bekannten Anordnung nicht möglich wäre.

Aus der AT 398 937 ist eine Vorrichtung zum Plastifizieren von thermoplastischen Kunststoffen bekanntgeworden, bei welcher an der Einbringöffnung eine Zerkleinerungseinrichtung in Form zweier parallel zueinander und parallel zur Achse der Extruderschnecke angeordnete Wellen vorgesehen sind, die mit einer Vielzahl von Zerkleinerungswerkzeugen ausgerüstet sind. Hierdurch soll erreicht werden, dass das in Form von Abfällen zugeführte Kunststoffgut einerseits wirksam zerkleinert wird und andererseits das zerkleinerte Kunststoffmaterial von der Extruderschnecke aufgenommen und in den plastischen Zustand überführt wird. Hier sind unterschiedlich schnell laufende Zerkleinerungswellen vorgeschlagen, wobei die schneller laufende Welle eine Stopfkomponente schafft, die das Kunststoffgut in Richtung zur Schnecke in die Gänge der Extruderschnecke drücken bzw. schleudern soll.

Weisen aber die der Extruderschnecke zuzuführenden Formmassen ein geringes Schüttgewicht auf, wie beispielsweise Folienschnitzel, Fasern od. dgl., ist es natürlich ein Bestreben der Fachwelt, mehr Volumen in die Extruderschnecke zu führen, wobei dieses Formmassenvolumen dann in der Extruderschnecke weiter verdichtet und plastifiziert wird.

Der Erfindung liegt die Aufgabe zugrunde, eine Anordnung zu schaffen, mit der es möglich ist, auch nicht-rieselfähige bzw. nicht-fließfähige, ein geringes Schüttgewicht aufweisende Formmassen in großer Menge, d. h. mit hohem Volumen, der Extruderschnecke zuzuführen und hier zu verdichten.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß das Zuführaggregat durch zwei mit gleicher Geschwindigkeit angetriebene Zuführschnecken gebildet wird, wobei die Mündung des Zuführaggregates, d. h. die Mündung der beiden Zuführschnecken in den Bereich der Extruderschnecke nach oben oder unten versetzt ist, d. h. die Achse der Extruderschnecke tiefer oder höher als die Achsen der Zuführschnecken liegt. Die Extruderschnecke weist dabei im Bereich der Einfüllzone eine größere Steigung (Steigung größer als 1 D) auf und ist im Bereich der Einfüllzone mehrgängig ausgebildet, wobei die Schneckenwellen der Zuführschnecken im Übergabebereich dekompressiv ausgebildet sind und der Schneckentrog der Zuführschnecken in eine der Weite des Schneckentroges der Zuführschnecken angepaße Öffnung des Extruderzylinders der Extruderschnecke mündet.

Der Versatz der Achsen der Zuführschnecken gegenüber der Achse der Extruderschnecke beträgt vorzugsweise etwa das Maß des halben Schneckendurchmessers, wobei die Länge des Übergabebereiches des Zuführaggregates etwa 10 % der Gesamtlänge des Zuführaggregates entspricht.

Das eigentliche Zuführaggregat, also die beiden Zuführschnecken, liegen im Bodenbereich eines Zuführtrichters, der relativ groß ausgebildet ist und mit Rührarmen ausgerüstet ist, um Brückenbildungen zu vermeiden und um eine gute Zuführung des nicht-rieselfähigen bzw. nicht-fließfähigen Kunststoffmaterials zum Zuführaggregat zu erreichen. Die die Mündung des Schneckentroges des Zuführaggregates und die Öffnung im Extruderzylinder der Extruderschnecke abdeckende Haube ist im inneren Bereich vorzugsweise abgerundet ausgebildet, um damit einen guten Übergang des von den Zuführschnecken geförderten Gutes in die Extruderschnecke zu gewährleisten.

Ein Ausführungsbeispiel der Erfindung wird nachfolgend anhand der Zeichnungen erläutert. Die Zeichnungen zeigen dabei in
- Fig. 1: eine schematische Draufsicht auf die erfindungsgemäße Anlage, in
- Fig. 2: einen Schnitt gemäß der Linie 2 - 2 in Fig. 1 und in
- Fig. 3: einen Schnitt gemäß der Linie 3 - 3 in Fig. 1.

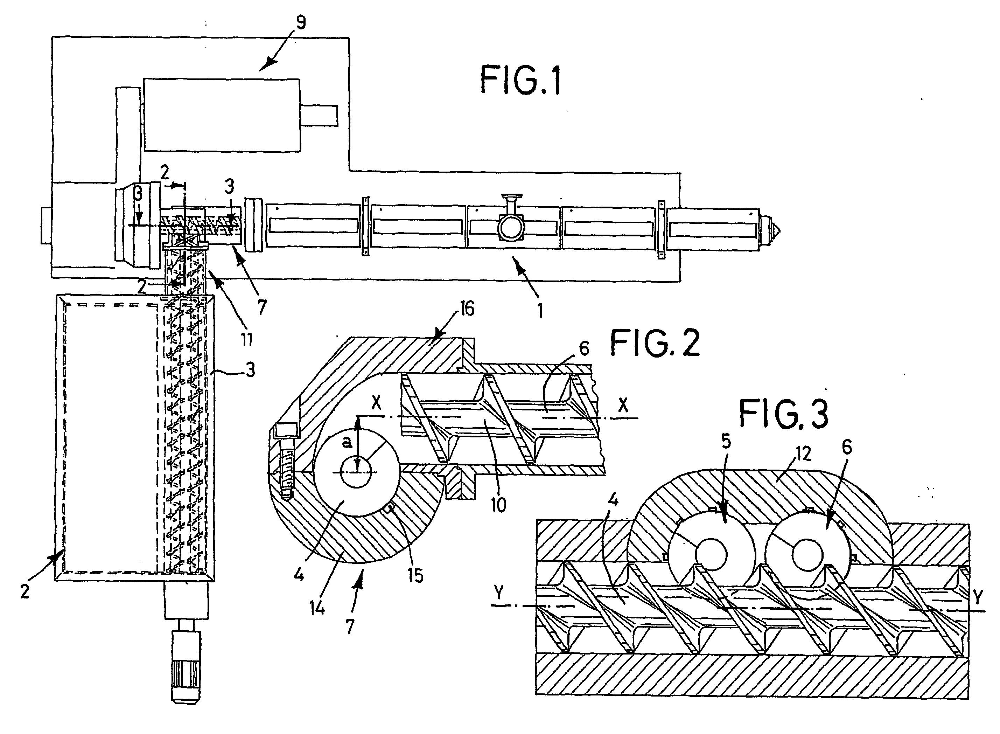

In Fig. 1 ist ein Extruder 1 dargestellt, der eine Antriebsvorrichtung 9 aufweist und eine Extrudereinfüllzone 7. In die Extrudereinfüllzone 7 mündet ein Zuführaggregat 3, das aus einem Vorratstrichter 2 beschickt wird, wobei das Zuführaggregat 3 aus zwei vorzugsweise gegenläufigen Schnecken 5, 6 besteht.

Das Zuführaggregat 3 befindet sich im unteren Bereich des Vorratstrichters 2 und in diesem können Paddel oder sonstige Rühraggregate zusätzlich vorgesehen sein, um Brückenbildungen des sich im Vorratstrichter befindenden, nicht-fließfähigen und nicht-rieselfähigem Materials zu verhindern, wobei es sich hier im wesentlichen um Folienschnitzel, Fasern od. dgl. handelt.

Auch das Zuführaggregat 3 weist einen Übergabebereich 11 auf, der in die Einfüllzone 7 des Extruders 1 mündet.

Die Darstellung in Fig. 2 läßt erkennen, dass die Extruderschnecke 4 im Bereich der Einfüllzone 7 in diesem Beispiel um ein Maß a tiefer liegt als die Mündung der Zuführschnecke 6. Die Achse der Zuführschnecke 6 ist in Fig. 2 mit X - X bezeichnet und die Achse der Extruderschnecke 4 in Fig. 3 mit Y - Y.

Fig. 2 läßt auch erkennen, dass im Mündungsbereich der beiden Zuführschnecken 5, 6 oberhalb der beiden Schnecken und damit auch oberhalb der Extruderschnecke 4 eine Haube 16 vorgesehen ist, die ein gutes Übergeben des Materials in die Extruderschnecke 4 und damit in den Extruderzylinder 14 der Extruderschnecke 4 gewährleistet. Weiterhin ist erkennbar, dass beispielsweise in der oberen Abdeckung des Schneckentroges 12 des Zuführaggregates 3 und im Extruderzylinder 14 der Extruderschnecke 4 Nuten 15 ausgearbeitet sind, die eine gute Förderung des Materials gewährleisten.

Die eigentlichen Schneckenwellen 10 der Zuführschnecken 5 und 6 sind im Übergabebereich dekompressiv ausgebildet, d. h. weisen einen geringeren Durchmesser als im übrigen Bereich der Zuführschnecken auf.

Fig. 3 läßt erkennen, dass die das Zuführaggregat 3 bildenden Zuführschnecken 5, 6 im Bereich der Einfüllzone 7 mit ihrer Mittelachse bei diesem Beispiel oberhalb der Achse Y - Y der Extruderschnecke 4 münden, und was weiterhin wesentlich ist, dass die Extruderschnecke 4 zumindest im Bereich der Einfüllzone 7 doppelgängig mzw mehrgänging ausgebildet ist. Außerdem weist die Extruderschnecke 4 im Bereich der Einfüllzone 7 eine größere Steigung auf als im übrigen Bereich, wobei die Steigung größer als 1 D ist, vorzugsweise 1,1 - 2,5 D. (Hierbei bezeichnet D den Durchmesser der Schnecke).

Durch diese Anordnung wird erreicht, dass relativ viel Volumen im Bereich der Extrudereinfüllzone 7 in den Extruder 1 und an die Extruderschnecke 4 übergeben werden kann, ohne dass ein Verstopfen im Übergabebereich 11 zu befürchten ist, wobei nunmehr dieses große Volumen im Verlauf der Förderung durch die Extruderschnecke 4 im Extruder 1 verdichtet und plastifiziert wird.

## Patentansprüche

1. Extrusionsanlage für das Recycling von nicht-rieselfähigen bzw. nicht-fließfähigen Kunststoffen mit einem Extruder (1) mit Extruderschnecke (4), einem Zuführaggregat (3), das von einem Vorratstrichter (2) beschickt die Formmasse in eine Extrudereinfüllzone (7) der Extruderschnecke (4) übergibt, wobei das Zuführaggregat (3) als Zuführschnecke ausgebildet ist, wobei
a) das Zuführaggregat (3) als Doppelschnecke (5, 6) ausgebildet ist,
b) die Achse (X - X) jeder Zuführschnecke (5, 6) gegenüber der Achse (Y - Y) der Extruderschnecke (4) höhenmäßig versetzt ist und
c) der Schneckentrog (12) der Doppelschnecke (5, 6) in eine der Weite des Schneckentroges (12) angepasste Öffnung des Extruderzylinders (14) der Extruderschnecke (4) mündet, **dadurch gekennzeichnet**,
d) dass die Extruderschnecke (4) im Bereich der Einfüllzone (7) mehrgängig ausgebildet ist,
e) dass die Extruderschnecke (4) im Bereich der Einfüllzone (7) eine Steigung größer als 1 D aufweist, wobei D den Schnecken-Durchmesser bezeichnet, und
f) dass die Schneckenwellen (10) der Zuführschnecke (5, 7) im Übergabebereich (11) dekompressiv ausgebildet sind.

2. Extrusionslanlage nach Anspruch 1, **dadurch gekennzeichnet, dass** die Extruderschnecke (4) im Bereich der Einfüllzone (7) doppelgängig ausgebildet ist.

3. Extrusionsanlage nach Anspruch 1 oder 2, dadurch gezeichnet, daß der Versatz (a) der Achse (X - X) gegenüber der Achse (Y - Y) nach oben oder unten etwa dem halben Schneckendurchmesser entspricht.

4. Extrusionsanlage nach einem der vorhergehenden Ansprüche, **dadurch gekennzeichnet, daß** die Schnecken (5, 6) des Zuführ-aggregates (3) gegenläufig angetrieben sind.

5. Extrusionsanlage nach Anspruch 1, **dadurch gekennzeichnet, daß** die Steigerung der Extruderschnecke (4) im Bereich der Einfüllzone (7) 1, 1 - 2,5 D beträgt.

6. Extrusionsanlage nach einem der vorhergehenden Ansprüche, **dadurch gekennzeichnet, daß** der Über-gabebereich (11) kurz ausgebildet ist, d. h. etwa 10 % der Gesamtlänge der Zuführschnecken (5, 6) beträgt.

7. Extrusionsanlage nach einem der vorhergehenden Ansprüche, **dadurch gekennzeichnet, dass** der Vorrats-trichter (2) sich über eine Länge von etwa 90 % der Länge der Zuführschnecken (5, 6) erstreckt und mit Rührarmen ausgerüstet ist.

8. Extrusionsanlage nach einem der vorhergehenden Ansprüche, **dadurch gekennzeichnet, dass** die Zuführschnecken (5, 6) nichtkämmend ausgebildet sind.

9. Extrusionsanlage nach einem der vorhergehenden Ansprüche, **dadurch gekennzeichnet, dass** der Extruderzylinder (14) im Übergabebereich (7) mit Nuten (15) ausgerüstet ist.

10. Extrusionsanlage nach einem der vorhergehenden Ansprüche, **dadurch gekennzeichnet, dass** die den Übergabebereich (7) und damit die Extruderschnecke (4) bzw. die Zuführschnecken (5, 6) überdeckende Haube (16) im Inneren abgerundet ausgebildet ist.

## Claims

1. Extrusion unit for recycling non pourable and non free-flowing plastics, with an extruder (1), extruder screw (4), feeder device (3) which is supplied from a storage hopper (2) and transfers the moulding material to an extruder-charging zone (7) of the extruder screw (4), where the feeder device (3) is designed as a feeder screw, and where
a) the feeder device (3) is designed as a double screw (5, 6),
b) the axis (X - Y) of each feeder screw (5, 6) is offset in height against the axis (Y - Y) of the extruder screw (4), and
c) the screw trough (12) of the double screw (5, 6) discharges through an opening of the extruder cylinder (14) of the extruder screw (4) which is adapted to the width of the screw trough (12), **characterised in that**,
d) the extruder screw (4) is designed with several threads in the extruder-charging zone (7),
e) the extruder screw (4) has a pitch greater than 1 D in the area of the charging zone (7), where D represents the diameter of the screw, and
f) the screw shafts (10) of the feeder screw (5, 7) are designed decompressively in the transfer area (11).

2. Extrusion unit according to claim 1, **characterised in that** the extruder screw (4) in the charging zone (7) is designed with a double thread.

3. Extrusion unit according to claim 1 or claim 2, **characterised in that** the upward or downward offset (a) of the axis (X - X) to axis (Y - Y) is equivalent to approximately half the screw diameter.

4. Extrusion unit according to one of the above claims, **characterised in that** the screws (5, 6) of the feeder device (3) are driven in opposite directions.

5. Extrusion unit according to claim 1, **characterised in that** the pitch of the extruder screw (4) in the area of the charging zone (7) is 1.1 - 2.5 D.

6. Extrusion unit according to one of the above claims, **characterised in that** the transfer area (11) is shortened, i.e. is equivalent to approximately 10% of the overall length of the feeder screws (5, 6).

7. Extrusion unit according to one of the above claims, **characterised in that** the storage hopper (2) extends over a length of approximately 90% of the length of the feeder screws (5, 6) and is equipped with stirring arms.

8. Extrusion unit according to one of the above claims, **characterised in that** the feeder screws (5, 6) are of a non-combing design.

9. Extrusion unit according to one of the above claims, **characterised in that** the extruder cylinder (14) in the transfer area (7) is equipped with grooves (15).

10. Extrusion unit according to one of the above claims, **characterised in that** the hood (16) covering the transfer area (7) and therefore the extruder screw (4) and the feeder screws (5, 6) is rounded in form in the interior.

## Revendications

1. Installation d'extrusion servant au recyclage de matières plastiques dénuées de faculté d'écoulement et/ou de fluidité, au moyen d'une extrudeuse (1) avec vis sans fin (4), d'un groupe alimentateur (3) qui, chargé par une trémie de stockage (2), remet la matière moulable dans une zone (7) de remplissage de la vis sans fin (4) de l'extrudeuse, sachant que le groupe alimentateur (3) est configuré comme une vis sans fin d'alimentation, sachant que
a) Le groupe alimentateur (3) est configuré en double vis sans fin (5, 6),
b) L'axe (X - X) de chaque vis sans fin alimentatrice (5, 6) est décalé en hauteur par rapport à l'axe (Y - Y) de la vis sans fin (4) de l'extrudeuse et que
c) L'auge (12) de la double vis sans fin (5, 6) débouche dans un orifice du cylindre (14) de la vis sans fin (4) de l'extrudeuse, orifice adapté à l'ouverture de l'auge (12) de la vis sans fin, **caractérisée en ce que**
d) La vis sans fin (4) de l'extrudeuse a été configurée à plusieurs pas dans le domaine de la zone de remplissage (7),
e) La vis sans fin (4) de l'extrudeuse présente, dans le domaine de la zone de remplissage (7), un pas d'hélice supérieur à 1 D, "D" désignant le diamètre de la vis sans fin, et que
f) Les arbres (10) de la vis alimentatrice (5, 7) présentent une configuration décompressive dans la zone de remise (11).

2. Installation d'extrusion selon la revendication 1, **caractérisée en ce que** la vis sans fin (4) de l'extrudeuse a été configurée à double pas dans le domaine de la zone de remplissage (7).

3. Installation d'extrusion selon la revendication 1 ou 2, **caractérisée en ce que** le décalage (a), vers le haut ou vers le bas, de l'axe (X - X) par rapport à l'axe (Y - Y), équivaut approximativement à un demi-diamètre de vis sans fin.

4. Installation d'extrusion selon l'une des revendications précédentes, **caractérisée en ce que** les vis sans fin (5, 6) du groupe alimentateur (3) sont entraînées en sens inverse l'une de l'autre.

5. Installation d'extrusion selon la revendication 1, **caractérisée en ce que** l'accroissement de la vis sans fin (4) de l'extrudeuse est compris entre 1,1 et 2,5 D dans le domaine de la zone de remplissage (7).

6. Installation d'extrusion selon l'une des revendications précédentes, **caractérisée en ce que** la zone de remise (11) a été configurée courte, représentant ainsi env. 10 % de la longueur totale des vis sans fin alimentatrices (5, 6).

7. Installation d'extrusion selon l'une des revendications précédentes, **caractérisée en ce que** la trémie de stockage (2) s'étend sur une longueur représentant env. 90 % de la longueur des vis sans fin alimentatrices (5,6), et est équipée de bras de malaxage.

8. Installation d'extrusion selon l'une des revendications précédentes, **caractérisée en ce que** les vis sans fin alimentatrices (5, 6) sont configurées sans engrènement.

9. Installation d'extrusion selon l'une des revendications précédentes, **caractérisée en ce que** le cylindre (14) de l'extrudeuse est équipé de rainures (15) dans la zone de remise (7).

10. Installation d'extrusion selon l'une des revendications précédentes, **caractérisée en ce que** le capot (16) recouvrant la zone de remise (7) et donc en même temps la vis sans fin (4) de l'extrudeuse et/ou les vis sans fin alimentatrices (5,6) présente une configuration intérieure arrondie.
